# EUROPEAN PATENT APPLICATION

(11) **EP 4 265 136 A1**
(43) Date of publication of application: **25.10.2023**
(21) Application number: 23165048.2
(22) Date of filing: 29.03.2023
(51) Int. Cl.: A24F 40/48, C04B 41/00, C04B 41/52, C04B 41/90, A24F 40/40

(54) **CERAMIC, CERAMIC PREPARATION METHOD, ATOMIZATION CORE, ATOMIZER, AND ELECTRONIC ATOMIZATION DEVICE**

(30) Priority: 20.04.2022 CN 202210418915
(71) Applicant: Shenzhen Smoore Technology Limited, Shenzhen Guangdong 518102 (CN)
(72) Inventor: LI, Pei, Shenzhen,Guangdong, 518102 (CN); LV, Hongxia, Shenzhen,Guangdong, 518102 (CN); JIANG, Zhenlong, Shenzhen,Guangdong, 518102 (CN)
(74) Representative: De Arpe Tejero, Manuel

(57) **Abstract**

The present disclosure discloses a ceramic (10), an atomization core (20), and an atomizer (100). The ceramic (10) includes a ceramic base (11) and a modification layer (12). The modification layer (12) is arranged on a surface of the ceramic base (11), and the modification layer (12) includes a bismuth-based oxide and other compositions. By optimizing the formulation of the modification layer (12) by adding the bismuth-based oxide in the modification layer (12), lead-containing oxides in the related art are replaced with the bismuth-based oxide. Therefore, the melting temperature of the modification layer (12) is lowered, the firing range of the modification layer is expanded, the thermal expansion coefficient of the modification layer (12) is lowered, and the thermal shock resistance and the tensile deformation resistance of the modification layer (12) are improved, thereby improving performance of the atomization core (20), and further improving performance of the atomizer (100).

## Description

### TECHNICAL FIELD

The present disclosure relates to the technical field of ceramic materials and the technical field of atomizers, and in particular, to a ceramic, a ceramic preparation method, an atomization core, an atomizer, and an electronic atomization device.

### BACKGROUND

An electronic atomization device is generally composed of an atomizer and a power supply assembly. The power supply assembly is configured to supply power to the atomizer. The atomizer in an energized state heats and atomizes an aerosol-forming substrate to generate an aerosol for a user to inhale. An atomization core is one of core components of the electronic atomization device, and its performance determines the atomization effect and use experience of the electronic atomization device.

A commonly used atomization core includes a ceramic base. A heating body is arranged on the ceramic base to realize heating of the aerosol-forming substrate. Generally, a modification layer is arranged on a surface of the ceramic base to enhance the bonding force between the heating body and the ceramic base. However, the existing modification layer has the problem of narrow firing range and poor thermal shock resistance.

### SUMMARY

In an aspect, an embodiment of the present disclosure provides a ceramic, including a ceramic base and a modification layer. The modification layer is arranged on a surface of the ceramic base, and the modification layer includes a bismuth-based oxide and other compositions.

In another aspect, an embodiment of the present disclosure provides a ceramic preparation method. The ceramic preparation method includes: obtaining a ceramic base; preparing a modification layer on a surface of the ceramic base; sintering the ceramic base and the modification layer. The ceramic base is the abovementioned ceramic base, and the modification layer is the abovementioned modification layer.

In a third aspect, an embodiment of the present disclosure provides an atomization core, including a ceramic and a heating layer. The ceramic is any of the ceramic, described above and the heating layer is stacked on the surface of the modification layer away from the ceramic base.

In a fourth aspect, an embodiment of the present disclosure provides an atomizer, including a liquid storage chamber for storing an aerosol-forming substrate and the atomization core described above, and the atomization core absorbs and heats the aerosol-forming substrate in the liquid storage chamber to atomize the aerosol-forming substrate.

In a fifth aspect, an embodiment of the present disclosure provides an electronic atomization device. The electronic atomization device includes an abovementioned atomizer and a power supply assembly, wherein the power supply assembly is configured to supply power to the atomizer, and the atomizer in an energized state heats and atomizes an aerosol-forming substrate to generate an aerosol for a user to inhale.

### BRIEF DESCRIPTION OF THE DRAWINGS

To describe the technical solutions in the embodiments of the present disclosure or the related art more clearly, the following briefly describes the accompanying drawings required for describing the embodiments or the related art. Apparently, the accompanying drawings in the following description show merely some embodiments of the present disclosure, and a person of ordinary skill in the art may still derive other drawings from the accompanying drawings without creative efforts.
FIG. 1 is a schematic structural view of an embodiment of a ceramic according to the present disclosure.
FIG. 2 is a schematic structural view of an embodiment of an electronic atomization device according to the present disclosure.
FIG. 3 is a schematic structural view of an atomizer in the electronic atomization device in FIG. 2.
FIG. 4 is a schematic structural view of an atomization core in the atomizer in FIG. 3.
FIG. 5 is a schematic structural top view of the atomization core in FIG. 4.

### DETAILED DESCRIPTION

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

The terms "first", "second", and "third" in the embodiments of the present disclosure are merely intended for a purpose of description, and shall not be understood as an indication or implication of relative importance or implicit indication of the number of indicated technical features. Therefore, features defined by "first", "second", and "third" may explicitly or implicitly include at least one of the features. In description of the present disclosure, unless explicitly specified, "multiple" means at least two, for example, two or three. In addition, the terms "include", "have", and any variant thereof are intended to cover a non-exclusive inclusion. For example, a process, method, system, product, or device that includes a series of steps or units is not limited to the listed steps or units, but further optionally includes a step or unit that is not listed, or further optionally includes another step or unit that is intrinsic to the process, method, product, or device.

"Embodiment" mentioned in the specification means that particular features, structures, or characteristics described with reference to the embodiment may be included in at least one embodiment of the present disclosure. The term appearing at different positions of this specification may not refer to the same embodiment or an independent or alternative embodiment that is mutually exclusive with another embodiment. A person skilled in the art explicitly or implicitly understands that the embodiments described in the specification may be combined with other embodiments.

Lead-containing glazes are generally used in existing modification layers on the ceramic surface, and generally have the problem such as narrow firing range and poor thermal shock resistance. Therefore, the present disclosure provides a ceramic 10, which is described in detail as follows.

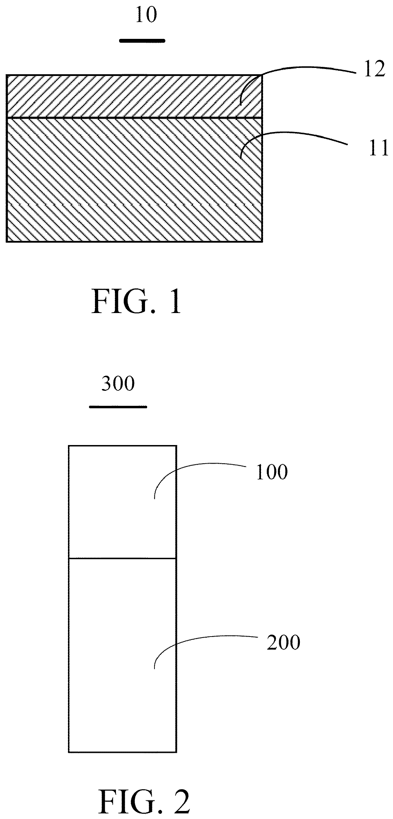

As shown in FIG. 1, FIG. 1 is a schematic structural view of an embodiment of a ceramic according to the present disclosure.

The present disclosure provides a ceramic 10. As shown in FIG. 1, the ceramic 10 includes a ceramic base 11 and a modification layer 12 arranged on a surface of the ceramic base 11. The modification layer 12 includes a bismuth-based oxide and other compositions. By arranging the modification layer 12 on the surface of the ceramic base 11, and optimizing the formulation of the modification layer 12 by adding the bismuth-based oxide in the modification layer 12, lead-containing oxides in the related art are replaced with the bismuth-based oxide, and the modification layer 12 containing the bismuth-based oxide has excellent performance. Therefore, the melting temperature and the thermal expansion coefficient of the modification layer 12 are effectively lowered, the firing range of the modification layer 12 is expanded, and the thermal shock resistance and the tensile deformation resistance of the modification layer 12 is improved. It may be understood that the arrangement of the modification layer 12 on the surface of the ceramic base 11 may effectively improve the strength and thermal stability of the ceramic 10 and prevent liquids, gases, etc. from eroding the ceramic base 11, and may also modify the surface of the ceramic base 11 to improve the surface evenness of the ceramic base 11.

The bismuth-based oxide in the modification layer 12 is mainly bismuth trioxide. The properties of bismuth trioxide are more stable, and the melting point and boiling point of bismuth trioxide are lower than those of lead oxide. Compared with the existing modification layers with lead-containing oxides added, the overall melting temperature of the modification layer 12 may be lowered, the firing range of the modification layer 12 may be expanded, and the sintering temperature of the modification layer 12 may be lowered. In addition, the thermal expansion coefficient of bismuth trioxide is lower than the thermal expansion coefficient of lead oxide. Compared with the existing modification layers with lead-containing oxides added, the overall thermal expansion coefficient of the modification layer 12 is effectively reduced, and the thermal shock resistance and tensile deformation resistance of the modification layer 12 are improved, thus the modification layer 12 may be better bonded with the ceramic surface, thereby preventing formation of cracks in the modification layer 12 on the ceramic surface.

In the modification layer 12, the mass percentage range of bismuth in the modification layer 12 is 50% to 80%. It may be understood that if the content of bismuth in the modification layer 12 is excessively low, property values such as the thermal expansion coefficient and melting temperature of the modification layer 12 may not be effectively lowered, and the properties such as firing range, thermal shock resistance, and tensile deformation resistance of the modification layer 12 may not be improved, affecting the performance of the modification layer 12.

The other compositions in the modification layer 12 include any one or more of sodium, magnesium, aluminum, silicon, potassium, calcium, titanium, zinc, zirconium, and barium.

In some embodiments, the other compositions in the modification layer 12 include zinc, and the mass percentage range of zinc in the modification layer 12 is 5% to 7%. Zinc exists in the form of oxide in the modification layer 12. Zinc oxide may be served as a fluxing agent in the modification layer 12 to lower the sintering temperature of the modification layer 12. Moreover, zinc oxide may increase the tensile deformation resistance of the modification layer 12, further reduces the overall thermal expansion coefficient of the modification layer 12, and improves the thermal shock resistance, to provide a better thermal compatibility between the modification layer 12 and the ceramic surface, such that cracking is less likely to occur during use afterward.

In the present embodiment, the composition of the modification layer 12 includes oxygen, sodium, magnesium, aluminum, silicon, potassium, calcium, zinc, bismuth, titanium, zirconium, and barium. The mass percentage of oxygen in the modification layer 12 is 21.94 wt%. The mass percentage of sodium in the modification layer 12 is 1.04 wt%. The mass percentage of magnesium in the modification layer 12 is 0.14 wt%. The mass percentage of aluminum in the modification layer 12 is 0.59 wt%. The mass percentage of silicon in the modification layer 12 is 12.79 wt%. The mass percentage of potassium in the modification layer 12 is 1.17 wt%. The mass percentage of calcium in the modification layer 12 is 0.43 wt%. The mass percentage of zinc in the modification layer 12 is 6.185 wt%. The mass percentage of bismuth in the modification layer 12 is 55.715 wt%. Titanium, zirconium, and barium are trace elements in the modification layer 12, are in low amounts in the modification layer 12, and account for less than 0.009% by mass of the modification layer 12.

The ceramic base 11 is a porous structure. In some embodiments, the ceramic base 11 is directly made of a porous ceramic material. For example, the porous ceramic may be a diatomite porous ceramic, an alumina porous ceramic, a mullite porous ceramic, or a composite porous ceramic composed of at least two of the foregoing materials, or a composite porous ceramic composed of alumina and mullite. Alternatively, the ceramic base 11 of a porous structure may be formed by forming pores in a dense ceramic material, and may be specifically designed according to requirements.

The porosity range of the porous ceramic material may be 30% to 70%. The porosity may be 30%, 35%, 50%, or 70%. The pore size range of the porous ceramic material is 200 nm to 200 µm.

The ceramic base 11 may be of any shape such as a cylinder, a sphere, a cuboid, a cube, or a prism, and may be set to any size, which is not limited herein. In the present embodiment, as shown in FIG. 1, the ceramic base 11 is in the shape of a cuboid.

The modification layer 12 may be prepared on the surface of the ceramic base 11 by a deposition process such as physical vapor deposition or chemical vapor deposition. For example, the modification layer 12 may be prepared by a technique such as sputtering, evaporation coating, or atomic layer deposition, thus a continuous porous structure or a continuous network structure is formed on the surface of the ceramic base 11 to modify the ceramic base 11. Alternatively, the surface of the ceramic base 11 may be directly coated with a raw material paste containing the composition of the modification layer 12. Various coating methods such as spraying, brushing, transfer printing, and screen printing may be used, which is not limited herein. After the modification layer 12 is prepared on the surface of the ceramic base 11, the ceramic base 11 and the modification layer 12 are sintered at a sintering temperature range of 500°C to 900°C. A ceramic 10 with good properties may be finally obtained by sintering at this sintering temperature.

The thickness range of the modification layer 12 is 50 µm to 300 µm. It may be understood that in order to form a continuous porous structure of the modification layer 12, the thickness of the modification layer 12 needs to be close to or less than the pore size of the porous ceramic. In some embodiments, the thickness range of the modification layer 12 is 50 µm to 200 µm. The modification layer 12 with such a thickness may form a relatively even surface on the porous ceramic base 11 and may ensure the formation of a continuous porous structure to ensure the liquid guiding ability of the porous ceramic.

In the present embodiment, by arranging the modification layer 12 containing bismuth trioxide on the surface of the ceramic base 11, lead, which is toxic, is replaced with bismuth, thereby ensuring the safety of the modification layer 12. In addition, compositions such as bismuth trioxide and zinc oxide in the modification layer 12 lower the sintering temperature of the modification layer 12, thereby preventing damage to the ceramic base 11 when sintered at an excessively high sintering temperature, thereby effectively reducing the thermal expansion coefficient of the modification layer 12 and improving the thermal shock resistance. Therefore the tensile strength and thermal stability of the ceramic 10 is improved , a better thermal compatibility and bonding between the modification layer 12 and the ceramic base 11 is provided, and the performance of the ceramic 10 is further improved.

The present disclosure further provides a ceramic preparation method for preparing the ceramic 10. The preparation method specifically includes the following operations.

### S1. Obtaining a ceramic base.

According to specific design requirements, the ceramic base 11 may be directly prepared from a porous ceramic material, or the ceramic base 11 of a porous structure may be prepared by forming pores in a dense ceramic material. In the present embodiment, the ceramic base 11 is made of the porous ceramic material, and the ceramic base 11 prepared is in the shape of a cuboid.

### S2. Preparing a modification layer on a surface of the ceramic base.

A modification layer 12 is prepared by a deposition process or by coating on the surface of the cuboid ceramic base 11 prepared in the foregoing operation. The modification layer 12 may be prepared on the surface of the ceramic base 11 by a deposition process such as physical vapor deposition or chemical vapor deposition, for example, by a technique such as sputtering, evaporation coating, or atomic layer deposition. Alternatively, the modification layer 12 may be coated on the surface of the ceramic base 11 by various coating methods such as spraying, brushing, transfer printing, and screen printing. The modification layer 12 with a continuous structure is formed on the surface of the ceramic base 11 by the foregoing process. The modification layer 12 prepared on the surface of the ceramic base 11 includes a bismuth-based oxide and other compositions. The bismuth-based oxide is mainly bismuth trioxide, and the other compositions include any one or more of sodium, magnesium, aluminum, silicon, potassium, calcium, titanium, zinc, zirconium, and barium, as may be designed according to specific requirements. Raw materials of the modification layer 12 generally include oxides, salts, or elementary substances containing the foregoing compositions and may be selected according to the selected process. When the coating process is selected, a bismuth-based oxide such as bismuth trioxide as well as a salt or an oxide containing at least one of sodium, magnesium, aluminum, silicon, potassium, calcium, titanium, zinc, zirconium, and barium may be selected. For example, the raw materials may be bismuth trioxide, zirconia, zinc oxide, magnesium oxide, calcium oxide, silicon micropowder, barium oxide, sodium carbonate, potassium carbonate, calcium carbonate, sodium silicate, potassium sodium tartrate, etc. Furthermore, the raw materials are mixed to prepare a raw material paste, and the paste is then coated on the ceramic base 11.

### S3. Sintering the ceramic base and the modification layer.

The ceramic base 11 and the modification layer 12 prepared in the foregoing operations are sintered at a sintering temperature range of 500 °C to 900 °C. After the sintering process, a ceramic 10 with excellent performance is finally obtained, in which the modification layer 12 and the ceramic base 11 are well bonded.

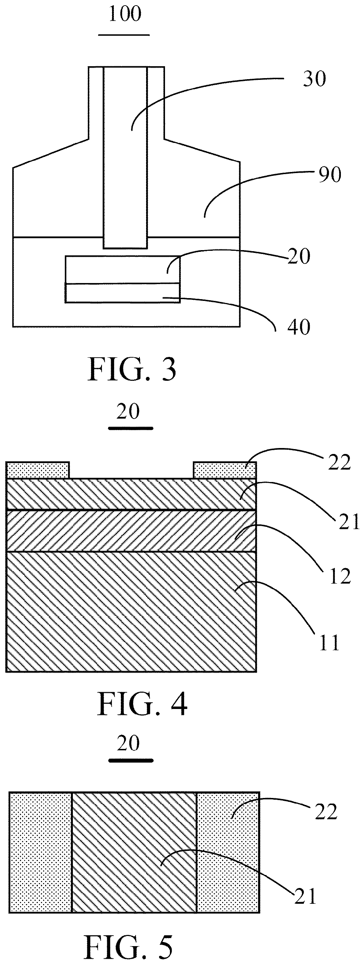

As shown in FIG. 2 and FIG. 3, FIG. 2 is a schematic structural view of an embodiment of an electronic atomization device according to the present disclosure, and FIG. 3 is a schematic structural view of an atomizer in the electronic atomization device in FIG. 2.

As shown in FIG. 2, the present disclosure provides an electronic atomization device 300. The electronic atomization device 300 includes an atomizer 100 and a power supply assembly 200. The power supply assembly 200 is configured to supply power to the atomizer 100. The atomizer 100 in an energized state heats and atomizes an aerosol-forming substrate to generate an aerosol for a user to inhale.

In some embodiments, the atomizer 100 and the power supply assembly 200 in the electronic atomization device 300 may be integrally formed or may be detachably connected to each other, which may be designed according to specific requirements.

As shown in FIG. 3, the atomizer 100 includes a liquid storage chamber 90, an air outlet tube 30, an atomization core 20, and an atomization chamber 40 formed in the atomizer 100. The liquid storage chamber 90 is configured to store an aerosol-forming substrate. The atomization core 20 is configured to absorb the aerosol-forming substrate in the liquid storage chamber 90, and heat and atomize the absorbed aerosol-forming substrate to finally generate an aerosol. The aerosol generated by atomization in the atomization chamber 40 flows through the air outlet tube 30 along with an external airflow, and finally flows out of the atomizer 100 for a user to inhale.

As shown in FIG. 4 and FIG. 5, FIG. 4 is a schematic structural view of the atomization core in the atomizer in FIG. 3, and FIG. 5 is a schematic structural top view of the atomization core in FIG. 4.

As shown in FIG. 4, the atomization core 20 includes a ceramic 10 and a heating layer 21. The ceramic 10 is the ceramic 10 provided in the present disclosure, and includes a ceramic base 11 and a modification layer 12. The modification layer 12 is arranged on the surface of the ceramic base 11, and the heating layer 21 is stacked on the surface of the modification layer 12 away from the ceramic base 11. It may be understood that the performance of the ceramic atomization core 20 is often affected by the quality of the ceramic base 11, and the surface of the ceramic base 11 needs to be modified. The modification layer 12 may modify the surface of the ceramic base 11 to form a continuous porous structure on the surface of the ceramic base 11, facilitating uniform heating and liquid guiding of the atomization core 20, and also allowing the heating layer 21 and the ceramic base 11 to be better bonded via the modification layer 12 to improve heating efficiency of the atomization core 20, thereby improving atomization efficiency of the atomization core 20.

For compositions and the mass percentages of the compositions of the modification layer 12 arranged on the surface of the ceramic base 11 in the present embodiment, reference may be made to the above description, and the details will not be repeated herein.

To test the thermal shock resistance of the modification layer 12 on the surface of the ceramic base 11 in the atomization core 20, the inventor of the present disclosure has carried out various experiments. Multiple experiments with different mass percentages of bismuth in the modification layer 12 were carried out to test whether cracks exist in the modification layer 12 on the surface of the ceramic base 11, so as to determine the thermal shock resistance of the modification layer 12.

During the normal use of the electronic atomization device 300, the temperature of the atomization core 20 ranges from 50 °C to 350 °C. To test the thermal shock resistance of the modification layer 12 in the atomization core 20, the inventor of the present disclosure has carried out margin tests on the modification layer 12 at a temperature range of 400°C to 800°C.

The inventor of the present disclosure has carried out seven experiments in total: Experiment 1, Experiment 2, Experiment 3, ..., and Experiment 7. The mass percentages of bismuth in the modification layer 12 were different in the seven experiments.

In Experiment 1, the mass percentage of bismuth in the modification layer 12 was 50 wt%, and the sintering temperature of the ceramic base 11 with the modification layer 12 arranged on the surface thereof was 500 °C. In Experiment 2, the mass percentage of bismuth in the modification layer 12 was 55 wt%, and the sintering temperature of the ceramic base 11 with the modification layer 12 arranged on the surface thereof was 550 °C. In Experiment 3, the mass percentage of bismuth in the modification layer 12 was 60 wt%, and the sintering temperature of the ceramic base 11 with the modification layer 12 arranged on the surface thereof was 600°C. In Experiment 4, the mass percentage of bismuth in the modification layer 12 was 65 wt%, and the sintering temperature of the ceramic base 11 with the modification layer 12 arranged on the surface thereof was 600 °C. In Experiment 5, the mass percentage of bismuth in the modification layer 12 was 68 wt%, and the sintering temperature of the ceramic base 11 with the modification layer 12 arranged on the surface thereof was 600 °C. In Experiment 6, the mass percentage of bismuth in the modification layer 12 was 70 wt%, and the sintering temperature of the ceramic base 11 with the modification layer 12 arranged on the surface thereof was 650 °C. In Experiment 7, the mass percentage of bismuth in the modification layer 12 was 80 wt%, and the sintering temperature of the ceramic base 11 with the modification layer 12 arranged on the surface thereof was 700 °C.

In the seven experiments, thermal shock tests were carried out on the modification layer 12 at an extreme temperature range of 400 °C to 800 °C. According to the experimental results obtained by the seven experiments, no cracks were observed in the modification layer 12 on the surface of the ceramic base 11. In other words, in the seven different experiments, the thermal shock resistance of the modification layer 12 was relatively strong.

After analyzing and studying the experimental results of the experiments, the inventor has found that when the mass percentage range of bismuth in the modification layer 12 was 50% to 80% and the sintering temperature of the ceramic base 11 with the modification layer 12 arranged on the surface thereof was 500 °C to 900 °C, the thermal shock resistance of the modification layer 12 was relatively strong, the thermal compatibility and bonding between the modification layer 12 and the surface of the ceramic base 11 were better, the thermal expansion coefficient of the modification layer 12 was lower, and the tensile deformation resistance was also stronger. In this case, during the use of the atomization core 20, cracking is less likely to occur in the modification layer 12, and the heating layer 21 arranged on the surface of the modification layer 12 is prevented from breaking due to cracks in the modification layer 12 and is prevented from further affecting atomization performance and service life of the atomization core 20. Therefore, the usage performance and service life of the atomization core 20 is ensured, and the atomization performance of the electronic atomization device 300 is improved.

The ceramic base 11 has a porous structure. Therefore, the modification layer 12 prepared on the surface of the ceramic base 11 by a process such as physical vapor deposition or chemical vapor deposition or coating also has a continuous porous structure or a continuous network structure. Such a structure does not affect the liquid supply effect of the ceramic base 11 to the heating layer 21. In addition, the continuous porous structure or continuous network structure is more conducive to the uniform heating and liquid guiding of the atomization core 20, such that the aerosol-forming substrate stored in the liquid storage chamber 90 may enter the atomization core 20 more uniformly, and then be heated and atomized by the heating layer 21 in the atomization core 20 to generate an aerosol, thereby improving the atomization performance of the atomization core 20, and further improving the flavor during inhalation by a user.

The shape and size of the ceramic base 11 are not limited. In the present embodiment, the ceramic base 11 is made of a porous ceramic material. The porous ceramic has pores and has functions of guiding and storing liquid, thereby after being absorbed by the ceramic base 11, the aerosol-forming substrate in the liquid storage chamber 90 infiltrates to an atomizing surface so as to be heated and atomized. In addition, the porous ceramic has stable chemical properties and does not chemically react with the aerosol-forming substrate. Moreover, the porous ceramic is resistant to high temperatures and does not deform due to excessively high heating temperature during atomization. The porous ceramic is an insulator and may not be electrically connected to the heating layer 21 to cause a short circuit which leads to failure of the atomization core 20. The porous ceramic may be easily manufactured at low costs. As shown in FIG. 4, the ceramic base 11 is a cuboid porous ceramic.

In some embodiments, the porosity of the porous ceramic may range from 30% to 70%. Porosity refers to the ratio of the total volume of tiny pores in a porous medium to the total volume of the porous medium. The porosity may be adjusted according to the composition of the aerosol-forming substrate. For example, when the viscosity of the aerosol-forming substrate is high, a higher porosity is selected to ensure the liquid guiding effect.

In some other embodiments, the porosity of the porous ceramic ranges from 50% to 60%. When the porosity of porous ceramics is 50% to 60%, on the one hand, high liquid guiding efficiency of the porous ceramic may be ensured to prevent the occurrence of dry burning due to poor conveyance of the aerosol-forming substrate, thereby improving the atomization effect of the atomizer 100. On the other hand, an excessively large porosity of the porous ceramic which leads to unduly fast liquid guiding, difficulty in retaining the liquid, and greatly increased probability of liquid leakage to affect the performance of the atomizer 100 may also be avoided.

The heating layer 21 is arranged on the surface of the modification layer 12 away from the ceramic base 11, is made of metal or alloy, and generates heat when energized so as to heat and atomize the aerosol-forming substrate. In some embodiments, the heating layer 21 may be at least one of a heating film, a heating coating, a heating circuit, a heating sheet, or a heating network. In the present embodiment, the heating layer 21 is a porous heating film structure. It may be understood that the porous structure on the heating layer 21 may allow the liquid aerosol-forming substrate to infiltrate to the heating layer 21 more efficiently, thereby improving the liquid guiding and heat conduction efficiency of the heating layer 21, and improving the atomization efficiency of the atomization core 20.

The heating layer 21 may be made of a material that may be stably bonded to the modification layer 12. For example, the heating layer 21 may be made of a material such as titanium, zirconium, titanium-aluminum alloy, titanium-zirconium alloy, titanium-molybdenum alloy, titanium-niobium alloy, iron-aluminum alloy, tantalum-aluminum alloy, or stainless steel.

Titanium and zirconium have the following characteristics. Both titanium and zirconium are metals with good biocompatibility. Particularly, titanium is a biophilic metal element, which has higher safety. Titanium and zirconium have relatively large resistivity among metal materials, and may achieve three times the original resistivity at room temperature after being alloyed according to a certain ratio, and therefore are more suitable as materials for the heating layer 21. Titanium and zirconium have low thermal expansion coefficients, may achieve lower thermal expansion coefficients after being alloyed, and have better thermal compatibility with the modification layer 12. After being alloyed according to a certain ratio, the alloy has a lower melting point and better film-forming property by magnetron sputtering coating. Through electron microscope analysis, it may be seen that microscopic particles of metals after being coated are spherical, and the particles together form a cauliflower-like microscopic morphology. It may be seen through electron microscope analysis that microscopic particles of a film formed by titanium-zirconium alloy are in the form of flakes, and some grain boundaries between particles disappear, exhibiting better continuity. Both titanium and zirconium have good plasticity and elongation. A titanium-zirconium alloy film has better thermal cycling resistance and current impact resistance. Based on the foregoing characteristics of titanium and zirconium, in the present embodiment, the heating layer 21 is made of titanium-zirconium alloy.

In some embodiments, the heating layer 21 may be prepared on the surface of the modification layer 12 away from the ceramic base 11 by a process such as physical vapor deposition or chemical vapor deposition. For example, the heating layer 21 may be prepared by a technique such as sputtering, evaporation coating, or atomic layer deposition.

In the present embodiment, the titanium-zirconium alloy film made of titanium-zirconium alloy is a partially dense film. However, because the modification layer 12 is a porous structure, the titanium-zirconium alloy film formed on the surface of the modification layer 12 also becomes a continuous porous structure, and the pore size distribution of the titanium-zirconium alloy film is slightly smaller than that of micropores in the surface of the modification layer 12.

As shown in FIG. 4, in this embodiment, the atomization core 20 further includes two electrodes 22. The two electrodes 22 are respectively electrically connected to the power supply assembly 200 in the electronic atomization device 300 to supply power to the heating layer 21 of the atomization core 20, and the heating layer 21 generates heat when energized, so as to heat and atomize the aerosol-forming substrate absorbed in the ceramic base 11 to generate an aerosol. As shown in FIG. 4 and FIG. 5, the two electrodes 22 are both arranged on the surface of the heating layer 21 away from the ceramic base 11, and the two electrodes 22 are spaced apart to facilitate the electrical connection between the power supply assembly 200 and the electrodes 22, so as to supply power to the atomization core 20.

Different from the related art, the present disclosure discloses a ceramic, an atomization core, and an atomizer. The ceramic includes a ceramic base and a modification layer, the modification layer is arranged on the surface of the ceramic base, and the modification layer includes a bismuth-based oxide and other compositions. By arranging the modification layer on the surface of the ceramic base, and optimizing the formulation of the modification layer by adding the bismuth-based oxide in the modification layer, lead-containing oxides in the related art are replaced with the bismuth-based oxide, and the modification layer containing the bismuth-based oxide has excellent performance. Therefore, the melting temperature of the modification layer is lowered, the firing range of the modification layer is expanded, the thermal expansion coefficient of the modification layer is lowered, and the thermal shock resistance and the tensile deformation resistance of the modification layer are improved, thereby improving performance of the atomization core, and further improving performance of the electronic atomization device.

A ceramic according to an embodiment of the present disclosure includes a ceramic base and a modification layer. The modification layer is arranged on a surface of the ceramic base and the modification layer includes a bismuth-based oxide and other compositions.

In some embodiments, the ceramic base is a porous ceramic.

In some embodiments, the bismuth-based oxide comprises bismuth trioxide.

In some embodiments, the mass percentage range of bismuth in the modification layer is 50% to 80%.

In some embodiments, the other compositions include one or more of sodium, magnesium, aluminum, silicon, potassium, calcium, titanium, zinc, zirconium, and barium.

In some embodiments, the other compositions comprise zinc, and the mass percentage range of zinc in the modification layer is 5% to 7%.

In some embodiments, the modification layer does not include lead.

In some embodiments, the modification layer is a continuous porous structure.

In some embodiments, the porosity range of the ceramic base is 30% to 70%.

In some embodiments, the pore size range of the ceramic base is 200 nm to 200 µm.

In some embodiments, the thickness range of the modification layer is 50 µm to 300 µm.

A ceramic preparation method according to an embodiment of the present disclosure includes: obtaining a ceramic base; preparing a modification layer on a surface of the ceramic base; sintering the ceramic base and the modification layer. The ceramic base is the abovementioned ceramic base, and the modification layer is the abovementioned modification layer.

An atomization core according to an embodiment of the present disclosure includes a ceramic and a heating layer. The ceramic is the abovementioned ceramic. The heating layer is stacked on the surface of the modification layer away from the ceramic base.

An atomizer according to an embodiment of the present disclosure includes a liquid storage chamber for storing an aerosol-forming substrate and the abovementioned atomization core. The atomization core absorbs and heats the aerosol-forming substrate in the liquid storage chamber to atomize the aerosol-forming substrate.

An electronic atomization device according to an embodiment of the present disclosure includes an abovementioned atomizer and a power supply assembly. The power supply assembly is configured to supply power to the atomizer , and the atomizer in an energized state heats and atomizes an aerosol-forming substrate to generate an aerosol for a user to inhale.

The foregoing descriptions are merely embodiments of the present disclosure, and the patent scope of the present disclosure is not limited thereto. All equivalent structure or process changes made according to the content of this specification and accompanying drawings in the present disclosure or by directly or indirectly applying the present disclosure in other related technical fields shall fall within the protection scope of the present disclosure.

## Claims

1. A ceramic (10), **characterized by** comprising:
a ceramic base (11); and
a modification layer (12), arranged on a surface of the ceramic base (10), wherein the modification layer (12) comprises a bismuth-based oxide and other compositions.

2. The ceramic (10) of claim 1, wherein the ceramic base (11) is a porous ceramic.

3. The ceramic (10) of claim 2, wherein the bismuth-based oxide comprises bismuth trioxide.

4. The ceramic (10) of claim 2, wherein the mass percentage range of bismuth in the modification layer is 50% to 80%.

5. The ceramic (10) of claim 2, wherein the other compositions comprise one or more of sodium, magnesium, aluminum, silicon, potassium, calcium, titanium, zinc, zirconium, and barium.

6. The ceramic (10) of claim 5, wherein the other compositions comprise zinc, and the mass percentage range of zinc in the modification layer is 5% to 7%.

7. The ceramic (10) of claim 2, wherein the modification layer (12) does not comprise lead.

8. The ceramic (10) of claim 2, wherein the modification layer (12) is a continuous porous structure.

9. The ceramic (10) of claim 2, wherein the porosity range of the ceramic base (11) is 30% to 70%.

10. The ceramic (10) of claim 2, wherein the pore size range of the ceramic base (11) is 200 nm to 200 µm.

11. The ceramic (10) of claim 1, wherein the thickness range of the modification layer (12) is 50 µm to 300 µm.

12. A ceramic preparation method, comprising:
obtaining a ceramic base (11);
preparing a modification layer (12) on a surface of the ceramic base (11);
sintering the ceramic base (11) and the modification layer (12);
wherein the ceramic base (11) is the ceramic base (11) of any one of the claims 1 to 11, and the modification layer (12) is the modification layer (10) of any one of the claims 1 to 11.

13. An atomization core (20), **characterized by** comprising:
a ceramic (10), wherein the ceramic (10) is the ceramic (10) of any one of claims 2 to 11;
and
a heating layer (21), stacked on the surface of the modification layer (12) away from the ceramic base (11).

14. An atomizer (100), **characterized by** comprising a liquid storage chamber for storing an aerosol-forming substrate and the atomization core (20) of claim 13, wherein the atomization core absorbs and heats the aerosol-forming substrate in the liquid storage chamber to atomize the aerosol-forming substrate.

15. An electronic atomization device (300), **characterized by** comprising an atomizer (100) of claim 14 and a power supply assembly (200), wherein the power supply assembly (200) is configured to supply power to the atomizer (100), and the atomizer (100) in an energized state heats and atomizes an aerosol-forming substrate to generate an aerosol.
